# FASCICULE DE BREVET EUROPEEN

(11) **EP 1 103 412 B1**
(45) Date de publication et mention de la délivrance du brevet: **26.12.2007**
(21) Numéro de dépôt: 00403279.3
(22) Date de dépôt: 23.11.2000
(51) Int. Cl.: B60N 2/02, B64D 11/06

(54) **Dispositif d'actionnement d'un élément de siège**
Betätigungsvorrichtung für ein Sitzelement
Actuating device of an element of a seat

(30) Priorité: 29.11.1999 FR 9915015
(43) Date de publication de la demande: 30.05.2001
(73) Titulaire: Precilec, 89000 Auxerre (FR)
(72) Inventeur: Marin-Martinod, Thierry, 95690 Nesles-la-Vallée (FR); Nivet, Laurent, 92600 Asnieres (FR)
(74) Mandataire: Blot, Philippe Robert Emile

(56) Documents cités:
- EP-A- 0 869 061
- WO-A-99/50089
- FR-A- 2 727 932
- US-A- 4 689 537
- US-A- 4 698 571

## Description

La présente invention concerne un ensemble d'au moins deux sièges.

Afin d'améliorer le confort de l'utilisateur, de nombreux sièges sont de nos jours, munis de dispositifs électriques d'actionnement permettant de modifier la configuration du siège par déplacement d'éléments mobiles de celui-ci. En particulier, de tels sièges sont notamment utilisés dans les véhicules de transport tels que les avions, les bateaux et les voitures de chemins de fer.

Il est courant que chaque siège comporte un dossier inclinable articulé à une extrémité d'une assise, ainsi qu'un repose-jambes, articulé à l'autre extrémité de l'assise. Le dossier et le repose-jambes sont tous deux déplaçables entre une position sensiblement verticale et une position sensiblement horizontale, permettant ainsi au siège de prendre plusieurs configurations. Par exemple, parmi ces configurations sont prévues une configuration de couchage de l'utilisateur dans laquelle le dossier et le repose-jambes sont tous deux sensiblement horizontaux et une configuration d'assise dans laquelle le repose-jambes et le dossier sont tous deux sensiblement verticaux.

Un dispositif d'actionnement est prévu pour chaque élément du siège mobile.

De plus, de nombreux sièges sont équipés de dispositifs permettant par une commande unique de provoquer le déplacement à la fois du repose-jambes et du repose-pieds et ce, afin d'amener le siège, par une commande unique, dans une configuration prédéterminée.

Pour chacune de ces configurations prédéterminées du siège, une position prédéterminée est fixée pour chaque élément de siège.

Afin de connaître à chaque instant la position des différents éléments de siège, et ainsi pouvoir gérer aisément leur déplacement, il est connu de prévoir dans les dispositifs d'actionnement des éléments de siège un transducteur tel qu'un potentiomètre permettant de recueillir des informations d'état représentatives de la position de chaque actionneur.

Afin d'assurer un déplacement satisfaisant de chaque élément de siège et un suivi correct de sa position, il est connu de mémoriser une information d'état de référence représentative de la position de l'actionneur pour une position de référence d'un élément de siège considéré. Tous les déplacements de l'élément de siège sont référencés par rapport à cette position de référence propre à l'élément de siège.

Ainsi, pour chacune des configurations prédéterminées du siège accessibles par un dispositif d'actionnement unique, on détermine la course de l'actionneur nécessaire pour que l'élément de siège atteigne la position cible souhaitée depuis sa position de référence.

A partir de la course souhaitée pour l'actionneur, on déduit une valeur d'incrément de l'information d'état relevée par le transducteur correspondant à cette course. Ainsi, pour amener un élément du siège vers une position prédéterminée, l'actionneur est mis en action jusqu'à ce que l'information d'état courante fournie par le transducteur soit égale à l'information d'état de référence incrémentée d'une valeur d'incrément correspondant à la course escomptée pour l'actionneur.

Cette solution fonctionne de manière satisfaisante. Toutefois, lorsque plusieurs sièges sont disposés côte à côte, comme par exemple dans une rangée de sièges d'un avion, on constate que, lorsque tous les sièges sont amenés dans une même configuration prédéterminée, les positions de chacun des éléments de siège ne sont pas rigoureusement identiques.

En effet, du fait des tolérances de fabrication de la structure mécanique des sièges ainsi que des imprécisions des transducteurs utilisés, même si, initialement, les éléments de siège considérés sont correctement alignés, après déplacement de ceux-ci suivant une course correspondant à une même valeur d'incrément pour les informations d'état issues du transducteur, les positions réelles des éléments de siège ne sont pas rigoureusement identiques, ce qui se traduit par des configurations légèrement différentes des sièges, même si les commandes données à chacun des sièges sont identiques.

Ainsi, l'aspect visuel de l'ensemble des sièges se trouve dégradé. De plus, comme les utilisateurs qui commandent de manière similaire leur siège n'obtiennent pas rigoureusement la même position pour chacun des éléments des sièges, certains d'entre eux peuvent ressentir une frustration.

L'invention a pour but de proposer un dispositif d'actionnement d'un élément de siège, permettant d'assurer que la position atteinte par l'élément de siège soit réellement la position escomptée, et en particulier que, lorsque plusieurs sièges équipés de ce dispositif sont installés côte à côte, ceux-ci réagissent de manière analogue lorsqu'ils sont commandés pour atteindre une configuration prédéterminée identique.

A cet effet, l'invention a pour objet un ensemble de sièges selon la revendication 1.

Des modes particuliers de réalisation sont définis dans les revendicatons dépendantes.

L'invention sera mieux comprise à la lecture de la description qui va suivre, donnée uniquement à titre d'exemple et faite en se référant aux dessins sur lesquels :
- la figure 1 est une vue schématique de côté d'un siège équipé de deux dispositifs d'actionnement selon l'invention ;
- la figure 2 est une vue schématique d'un actionneur d'un dispositif d'actionnement selon l'invention ;
- les figures 3, 4 et 5 sont des vues schématiques du siège de la figure 1 représenté dans trois configurations prédéterminées distinctes ;
- la figure 6 est un organigramme illustrant le processus de calibrage d'un dispositif d'actionnement selon l'invention ; et
- la figure 7 est un organigramme explicitant le fonctionnement d'un dispositif d'actionnement selon l'invention.

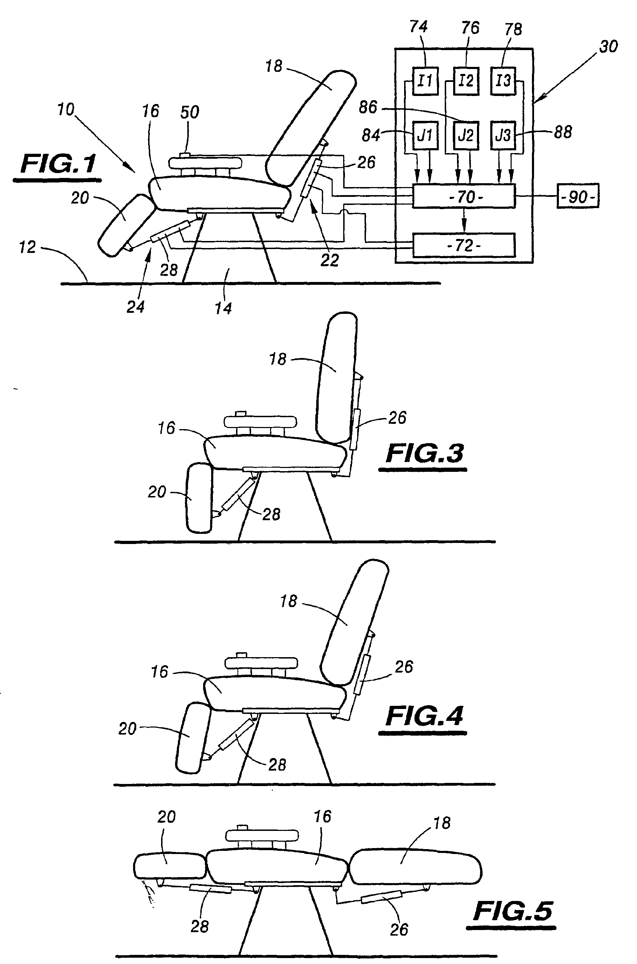

Le siège 10 représenté sur la figure 1 est un siège de passager d'un avion. Ce siège est fixé sur le sol 12 de l'avion.

Le siège 10 comporte un piétement 14 solidaire du sol 12 sur lequel repose une assise 16 sensiblement horizontale. A une extrémité de l'assise est articulé un dossier 18 déplaçable entre une position sensiblement verticale et une position sensiblement horizontale dans laquelle il prolonge l'assise 16.

A l'autre extrémité de l'assise 16, est articulé un repose-jambes 20 déplaçable entre une position rabattue sensiblement verticale au-dessous de l'assise 16 et une position étendue sensiblement horizontale dans le prolongement de l'assise 16.

Un premier dispositif d'actionnement 22 est monté entre l'assise 16 et le dossier 18 afin d'assurer un déplacement de ce dernier entre sa position verticale et sa position horizontale.

De même, un second dispositif d'actionnement 24 est monté entre l'assise 16 et le repose-jambes 20 afin d'assurer un déplacement de ce dernier entre sa position rabattue et sa position étendue.

Chaque dispositif d'actionnement 22, 24 comporte un actionneur propre, noté 26, 28 respectivement. Ces actionneurs sont alimentés en courant électrique depuis une unité commande commune 30 constituant une partie des dispositifs d'actionnement de chaque élément du siège. Cette unité de commande 30 est reliée séparément à chacun des actionneurs 26, 28 afin d'assurer leur pilotage indépendant.

Les actionneurs 26 et 28 ont sensiblement la même structure. L'un deux est illustré schématiquement sur la figure 2.

Ainsi, un actionneur comporte un groupe motoréducteur 36 associé, comme connu en soi, par exemple à l'aide d'un agencement vis-écrou 37 à une tige 38 mobile en translation par rapport à un carter 40 dans lequel est fixé le groupe motoréducteur.

En outre, un potentiomètre 42 ou tout autre type de transducteur adapté est fixé au carter 40. Un curseur 44 du potentiomètre est solidarisé à une extrémité de la tige 38 de l'actionneur. Le potentiomètre 42 est relié à l'unité de commande 30. Ainsi, le potentiomètre 42 permet à l'unité de commande 30 de recueillir en continu une information d'état représentative de la position courante de l'actionneur. Cette information est la résistance du potentiomètre dans le cas considéré.

Un clavier 50 (figure 1) est solidarisé au siège pour permettre à l'utilisateur d'atteindre par une commande unique agissant sur plusieurs actionneurs une de trois configurations prédéterminées du siège. Le nombre de configurations distinctes peut être différent de trois, par exemple égal à deux ou supérieur à quatre. A cet effet, le clavier comporte, dans l'exemple considéré, trois boutons chacun associé à une configuration prédéterminée. Ces configurations, qui sont illustrées respectivement aux figures 3 à 5, sont une configuration de repas, une configuration d'atterrissage et une configuration de couchage.

Une autre position prédéterminée peut être définie directement par l'utilisateur et est accessible par un bouton spécifique.

Dans la configuration de repas, illustrée sur la figure 3, le repose-jambes 20 et le dossier 18 se trouvent tous deux dans des positions prédéterminées dans lesquelles ils sont rigoureusement verticaux et définissent un angle de 90° avec le plan de l'assise.

Dans la configuration d'atterrissage, illustrée sur la figure 4, le dossier 18 et le repose-jambes 20 sont dans des positions prédéterminées telles que le dossier 18 définit un angle d'environ 20° avec le plan de l'assise alors que le repose-jambes 20 définit un angle d'environ 10° avec la verticale.

Dans la configuration de couchage, illustrée sur la figure 5, le dossier 18 et le repose-jambes 20 sont dans des positions prédéterminées dans lesquelles ils prolongent l'assise 16 et s'étendent ainsi sensiblement dans le plan de celle-ci.

Afin d'assurer la commande du siège, l'unité de commande 30 comporte une unité centrale de traitement d'informations 70 à laquelle est relié le clavier 50. De plus, les potentiomètres des deux actionneurs 26 et 28 sont également reliés à cette unité centrale de traitement d'informations 70 afin de fournir à celle-ci en continu la valeur de l'information d'état propre à chaque actionneur.

Cette unité centrale de traitement d'informations est reliée à une unité 72 d'alimentation des actionneurs 26 et 28. L'unité 72 est adaptée pour alimenter en courant électrique les actionneurs 26 et 28 en fonction d'ordres de commande reçus de l'unité centrale de traitement d'informations 70. En particulier, le courant électrique fourni par l'unité d'alimentation 72 est adapté pour assurer une vitesse satisfaisante des actionneurs ainsi qu'un courant ayant une forme permettant le déplacement de l'actionneur dans le sens souhaité.

Pour chacune des positions cibles devant être prises par les éléments de siège lors de la modification du siège vers une configuration prédéterminée, les moyens de commande 30 comportent des moyens de mémorisation d'une information d'état représentative de la position exacte de l'actionneur lorsque l'élément de siège associé est dans la position cible escomptée.

Ainsi, pour chaque élément de siège, plusieurs informations d'état de référence sont mémorisées. Chaque information d'état de référence correspond à une position cible pour un élément de siège, cette position cible étant définie pour une configuration prédéterminée du siège.

Plus précisément, et comme illustré sur la figure 1, l'unité de commande 30 comporte une mémoire 74 pour le stockage d'une information d'état de référence notée I₁ correspondant à la valeur de l'information d'état fournie par le potentiomètre de l'actionneur 26 lorsque le dossier 18 est dans sa position cible occupée lorsque le siège est dans sa configuration de repas.

De même, l'unité de commande 30 comporte deux autres mémoires 76, 78, dans lesquelles sont mémorisées des informations d'état de référence notées I₂ et I₃ correspondant, respectivement, aux informations d'état fournies par le potentiomètre de l'actionneur 26 lorsque le siège est dans une configuration exacte d'atterrissage et de couchage.

De manière analogue, l'unité de commande 30 comporte, pour le repose-jambes 20, trois mémoires notées 84, 86, 88, dans lesquelles sont mémorisées trois informations d'état de référence notées J₁, J₂, J₃ correspondant aux valeurs des informations d'état relevées par le potentiomètre de l'actionneur 28 respectivement lorsque le siège est exactement dans sa configuration de repos, de décollage et de couchage.

Les mémoires 74 à 88 sont reliées à l'unité centrale de traitement d'informations 70. Ces mémoires sont réinscriptibles sous la commande d'une unité centrale 70. En particulier, l'unité centrale de traitement d'informations est adaptée pour, lors de la réception d'un ordre de commande adapté issu par exemple d'un clavier annexe 90, mémoriser, dans chacune des mémoires, les informations d'état courantes mesurées par l'un ou l'autre des potentiomètres des actionneurs 26 et 28.

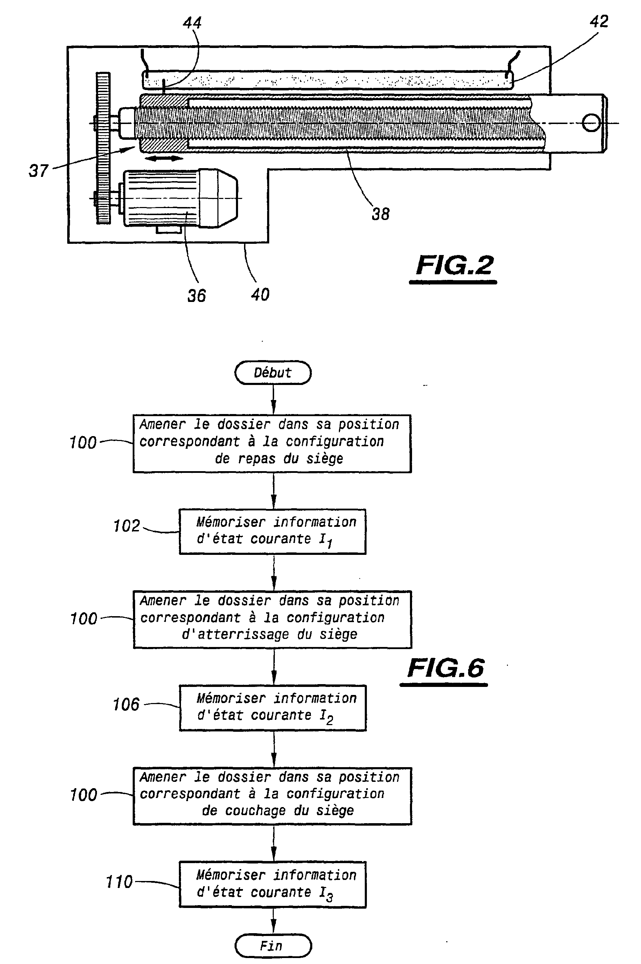

Afin de mémoriser ces informations d'état de référence, l'algorithme de calibrage multiple décrit sur la figure 6 est mis en oeuvre. Cet algorithme est décrit pour la mémorisation des informations d'état de référence du dossier. Toutefois, un algorithme analogue est mis en oeuvre pour le repose-jambes. Cet algorithme ne peut être mis en oeuvre que par des personnes habilitées et non par le passager lui-même.

A l'étape 100, le dossier est d'abord amené manuellement dans sa position cible correspondant à la configuration de repas du siège illustrée sur la figure 3.

A l'étape 102, par enfoncement d'une touche prédéterminée du clavier annexe 90, la valeur fournie par le potentiomètre de l'actionneur 22 est mémorisée dans la mémoire 74 et constitue alors l'information d'état de référence du dossier correspondant à la configuration de repas du siège.

Le dossier 18 est ensuite amené manuellement, à l'étape 104, dans sa position cible correspondant à la configuration de décollage du siège. Par l'enfoncement d'une touche prédéterminée du clavier annexe 90, la valeur de l'information d'état fournie par le potentiomètre est mémorisée dans la mémoire 76.

Enfin, aux étapes 108 et 110, le dossier est amené dans sa position cible correspondant à la configuration de couchage du siège et la valeur indiquée par le potentiomètre pour cette position du dossier est mémorisée dans la mémoire 78.

Un algorithme de calibrage multiple analogue est mis en oeuvre pour le repose-jambes 20 afin d'introduire des valeurs dans les mémoires 84 à 88.

La mémorisation des informations d'état de référence du dossier et du repose-jambes pour une configuration donnée du siège peut être mémorisée simultanément par appui sur un unique bouton.

En variante, les informations d'état de référence sont mémorisées séparément pour chaque élément du siège et pour chaque configuration déterminée. Dans cette variante, la calibration d'un élément de siège ayant été remplacé est aisée, puisque seul l'élément de siège remplacé doit être amené dans la position cible correspondant à la configuration donnée du siège pour mémoriser l'information d'état de référence associée.

En outre, suivant un mode particulier de réalisation, le dispositif d'actionnement comporte des moyens de sauvegarde d'une configuration du siège préférée de l'utilisateur et des moyens de commande permettant au siège de reprendre automatiquement cette configuration préférée. Les moyens de sauvegarde comportent un bouton de sauvegarde actionnable par l'utilisateur et des moyens de relever et de mémorisation de l'information d'état de référence de chaque actionneur lors de l'enfoncement du bouton de sauvegarde. Lors de la sélection de la position préférée par l'utilisateur, les actionneurs sont mis en action jusqu'à ce que l'information représentative de la position courante fournie par chaque transducteur soit égale à l'information d'état de référence correspondante.

Lorsque plusieurs sièges analogues sont disposés côte à côte, l'algorithme illustré sur la figure 6 est mis en oeuvre séparément pour chaque élément de siège. Ainsi, les valeurs I₁, I₂, I₃, J₁, J₂, J₃ mémorisées dans les mémoires de chaque siège correspondent à des positions des actionneurs pour lesquelles les éléments de siège correspondants sont parfaitement alignés. Ces valeurs sont a priori différentes d'un siège à l'autre du fait des tolérances de fabrication des sièges et des non linéarités des potentiomètres.

Cette phase initiale de calibrage n'est mise en oeuvre que lors du montage des sièges. Les valeurs stockées dans les mémoires 74 à 88 sont ensuite conservées pour toute la durée de vie du siège. Toutefois, ces valeurs peuvent être modifiées, si nécessaire, afin de définir de nouvelles configurations prédéterminées pour chaque siège ou lors des opérations de maintenance après remplacement de l'un des éléments.

Ainsi, les valeurs stockées en mémoire correspondant aux configurations prédéterminées ne sont pas modifiables par l'utilisateur du siège. Seules les valeurs correspondant à la ou chaque configuration préférée du siège peuvent être modifiées. Les valeurs correspondant aux configurations prédéterminées ne sont modifiables que par les opérateurs de maintenance grâce à l'utilisation de moyens amovibles ou à accès codé ou verrouillé permettant le relevé des informations d'état de référence supplémentaires et leur mémorisation.

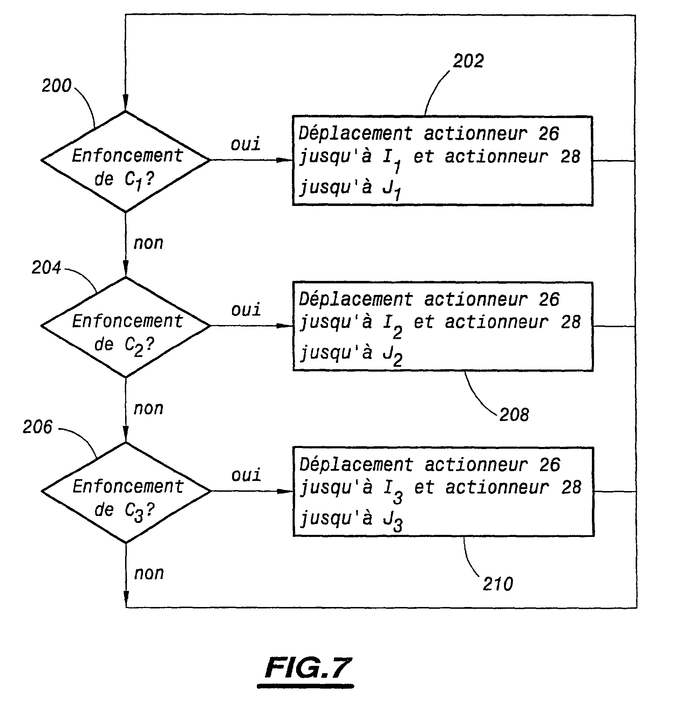

Après cette phase initiale de calibrage, l'unité de commande 30 est adaptée pour mettre en oeuvre l'algorithme illustré sur la figure 7.

En particulier, des tests sont effectués en continu pour scruter l'enfoncement d'une touche du clavier 50 correspondant à une configuration prédéterminée.

Lors de la détection, à l'étape 200, l'enfoncement d'une touche C1 de commande prédéterminée, correspondant à une mise en configuration de repas du siège, l'actionneur 26 du dossier est commandé, à l'étape 202, jusqu'à ce que l'information d'état fournie par le potentiomètre soit égale à la valeur I₁ stockée dans la mémoire 74. Simultanément, l'actionneur 28 est commandé jusqu'à ce que l'information associée soit égale à J₁.

Si l'un des tests effectués aux étapes 204 et 206 correspondant respectivement aux configurations d'atterrissage et de couchage du siège est vérifié, l'actionneur 26 est mis en action, aux étapes 208 ou 210, jusqu'à ce que l'information d'état fournie par le potentiomètre soit égale à la valeur I₂ ou I₃ stockée dans la mémoire 76 ou 78 respectivement. Simultanément, l'actionneur 28 est commandé jusqu'à ce que l'information associée soit égale à J₂ ou J₃.

On conçoit qu'avec la mise en oeuvre de tels algorithmes, lors de la commande de la modification de la configuration d'un siège vers une configuration prédéterminée, chacun des actionneurs amène l'élément de siège qu'il commande dans une position telle que l'information d'état fournie par le potentiomètre associé soit égale à celle mémorisée lors de la phase de calibrage. Ainsi, tous les sièges adjacents étant calibrés, alors que les positions des éléments de siège sont rigoureusement identiques, lors de commandes identiques des sièges, tous les sièges sont dans des configurations rigoureusement identiques, quelles que soient les tolérances de fabrication des sièges et les éventuelles disparités de mesure des potentiomètres.

## Revendications

1. - Ensemble de sièges comportant au moins deux sièges analogues disposés côte à côte, chaque siège comportant au moins un élément mobile (18, 20) et au moins un dispositif d'actionnement (22, 24) associé mécaniquement au ou à chaque élément du siège, lequel dispositif d'actionnement (22, 24) comprend :
- un actionneur (26 ; 28) muni d'un transducteur (42) adapté pour fournir une information d'état représentative de la position courante de l'actionneur,
- une unité (30) de commande dudit actionneur reliée audit transducteur afin de recevoir ladite information d'état représentative de la position de l'actionneur, l'unité de commande (30) comportant :
• des moyens (42) de relever d'une information d'état de référence représentative de la position de l'actionneur (26 ; 28) pour une position de référence identifiée de l'élément (18 ; 20),
• des moyens (74 ; 84) de mémorisation de ladite information d'état de référence ; et
• des moyens (70, 72) de pilotage de l'actionneur (26, 28) pour le déplacement de l'élément de siège (18 ; 20) vers au moins une position cible prédéterminée de l'élément de siège différente de la position de référence,
**caractérisé en ce que** ladite unité de commande (30) comporte :
- des moyens (42) de relever d'au moins une information d'état de référence supplémentaire, chacune représentative de la position de l'actionneur (26 ; 28) pour une position cible prédéterminée de l'élément de siège (18 ; 20) ;
- des moyens (76, 78 ; 86, 88) de mémorisation de la ou chaque information d'état de référence supplémentaire ;
**en ce que** ladite unité de commande (30) est adaptée pour, lors de la commande d'un déplacement de l'élément de siège (18 ; 20) vers une position cible prédéterminée ou vers la position de référence, mettre en action l'actionneur (26, 28) jusqu'à ce que l'information d'état de référence courante fournie par ledit transducteur (42) soit égale à ladite information d'état de référence mémorisée pour ladite position de l'élément de siège désignée par la commande,
et **en ce que** l'information d'état de référence représentative de la position de l'actionneur pour la position de référence identifiée de l'élément (18, 20) et la ou chaque information d'état de référence supplémentaire, chacune représentative de la position de l'actionneur (26, 28) pour une position cible prédéterminée de l'élément de siège (18, 20) pour lesdits au moins deux sièges analogues disposés côte à côte correspondent à des positions des actionneurs pour lesquelles les éléments de siège correspondants sont parfaitement alignés.

2. - Ensemble de sièges selon la revendication 1, **caractérisé en ce que** ledit transducteur est un potentiomètre (42).

3. - Ensemble de sièges selon la revendication 1 ou 2, **caractérisé en ce que** ladite information d'état de référence et lesdites informations d'état de référence supplémentaires sont au nombre de trois.

4. - Ensemble de sièges selon l'une quelconque des revendications précédentes, **caractérisé en ce que** chaque siège comporte au moins deux éléments mobiles (18, 20), chacun associé mécaniquement à un dispositif (22, 24) d'actionnement, **en ce que** chaque siège comporte un dispositif (50) adapté pour, sous l'action d'une commande unique fournie par l'utilisateur, amener le siège dans au moins une configuration prédéterminée, et **en ce que** lesdites positions cibles prédéterminées ou ladite position de référence des éléments de siège sont les positions des éléments de siège dans la ou chaque configuration prédéterminée du siège.

5. - Ensemble de sièges selon la revendication 4, **caractérisé en ce que** lesdites configurations prédéterminées du siège comportent une configuration de repas, une configuration d'atterrissage et une configuration de couchage.

6. - Ensemble de sièges selon la revendication 4 ou 5, **caractérisé en ce que** les positions cibles prédéterminées et les positions de référence des éléments de siège correspondants sont identiques pour tous les sièges dudit ensemble de sièges.

## Claims

1. Seat assembly comprising at least two analogous seats disposed side by side, each seat comprising at least one moveable element (18, 20) and at least one actuation device (22, 24) which is associated mechanically with the seat, or with each element of the seat, which actuation device (22, 24) comprises:
- an actuator (26; 28) provided with a transducer (42) adapted to provide an item of data concerning the representative state of the current position of the actuator,
- a control unit (30) of said actuator connected to said transducer so as to receive said item of data concerning the representative state of the position of the actuator, the control unit (30) comprising:
• means (42) for recording an item of data concerning the reference state representative of the position of the actuator (26; 28) for an identified reference position of the element (18; 20),
• means (74; 84) for storing said item of data concerning the reference state; and
• means (70, 72) for controlling the actuator (26, 28) for the displacement of the seat element (18; 20) towards at least one predetermined target position of the seat element which differs from the reference position,
**characterised in that** said control unit (30) comprises:
- means (42) for recording at least one additional item of data concerning the reference state, each one being representative of the position of the actuator (26; 28) for a predetermined target position of the seat element (18; 20);
- means (76, 78; 86, 88) for storing the one or each additional item of data concerning the reference state;
and **in that** said control unit (30) is adapted, during control of a displacement of the seat element (18; 20) towards a predetermined target position or towards the reference position, to activate the actuator (26, 28) until the current item of data concerning the reference state provided by said transducer (42) is equal to said item of data concerning the reference state stored for said position of the seat element designated by the command, and **in that** the item of data concerning the reference state representative of the position of the actuator for the identified reference position of the element (18, 20) and the one or each additional item of data concerning the supplementary reference state, each one being representative of the position of the actuator (26, 28) for a predetermined target position of the seat element (18, 20) for said at least two analogous seats disposed side by side, correspond to positions of the actuators for which the corresponding seat elements are perfectly aligned.

2. Seat assembly according to claim 1, **characterised in that** said transducer is a potentiometer (42).

3. Seat assembly according to claim 1 or 2, **characterised in that** said item of data concerning the reference state and said additional data concerning the reference state are three in number.

4. Seat assembly according to any of the preceding claims, **characterised in that** each seat comprises at least two moveable elements (18, 20), each associated mechanically with an actuation device (22, 24), **in that** each seat comprises a device (50) adapted, under the influence of a unique command provided by the user, to move the seat to at least one predetermined configuration, and **in that** said predetermined target positions or said reference position of the seat elements are the positions of the seat elements in the one or in each predetermined configuration of the seat.

5. Seat assembly according to claim 4, **characterised in that** said predetermined configurations of the seat comprise an eating configuration, a landing configuration and a sleeping configuration.

6. Seat assembly according to claim 4 or 5, **characterised in that** the predetermined target positions and the corresponding reference positions of the seat elements are identical for all of the seats of said seat assembly.

## Patentansprüche

1. Sitzeinheit, umfassend mindestens zwei analoge Sitze, die Seite an Seite angeordnet sind, wobei jeder Sitz mindestens ein bewegliches Element (18, 20) und mindestens eine Betätigungsvorrichtung (22, 24) umfasst, die mechanisch mit dem bzw. jedem Element des Sitzes verbunden ist, wobei die Betätigungsvorrichtung folgende Elemente (22, 24) umfasst:
- ein Betätigungselement (26; 28), welches mit einem Messwertumsetzer (42) versehen ist, der dazu geeignet ist, eine Zustandsinformation zu liefern, die für die laufende Position des Betätigungselements steht,
- eine Steuereinheit (30) für das Betätigungselement, die mit dem Messwertumsetzer verbunden ist, um die Zustandsinformation, die für die laufende Position des Betätigungselements steht, zu empfangen, wobei die Steuereinheit (30) umfasst:
• Mittel (42) zur Aufnahme einer Information über einen Referenzzustand, der für die Position des Betätigungselements (26; 28) bei einer identifizierten Referenzposition des Elements (18; 20) steht,
• Mittel (74; 84) zur Speicherung dieser Information über den Referenzzustand, und
• Mittel (70, 72) zur Steuerung des Betätigungselements (26, 28) zum Bewegen des Sitzelements (18; 20) in mindestens eine vorbestimmte Zielposition des Sitzelements, die sich von der Referenzposition unterscheidet,
**dadurch gekennzeichnet, dass** die Steuereinheit (30) umfasst:
- Mittel (42) zur Aufnahme von mindestens einer zusätzlichen Information über einen Referenzzustand, die jeweils für die Position des Betätigungselements (26; 28) bei einer vorbestimmten Zielposition des Sitzelements (18; 20) steht;
- Mittel (76, 78; 86, 88) zur Speicherung der bzw. jeder zusätzlichen Information über einen Referenzzustand;
und **dadurch**, dass die Steuereinheit (30) dazu geeignet ist, bei der Steuerung einer Bewegung des Sitzelements (18; 20) in eine vorbestimmte Zielposition oder in die Referenzposition das Betätigungselement (26, 28) zu aktivieren, bis die Information über den laufenden Referenzzustand, die von dem Messwertumsetzer (42) geliefert wird, gleich der Information über einen Referenzzustand ist, die für die Position des von der Steuerung betroffenen Sitzelements gespeichert ist;
und **dadurch**, dass die Information über den Referenzzustand, der für die Referenzposition des Betätigungselements steht, und die Information über den oder die zusätzlichen Referenzzustände, wobei jeder für eine weitere Referenzposition des Betätigungselements für eine vorher festgelegte Zielposition des Sitzelements für die genannten mindestens zwei analogen Sitze, die Seite an Seite angeordnet sind, den Positionen der Betätigungselemente, bei denen die zugeordneten Sitzelemente perfekt zueinander ausgerichtet sind, entspricht.

2. Sitzeinheit nach Anspruch 1, **dadurch gekennzeichnet, dass** der Messwertumsetzer ein Potentiometer (42) ist.

3. Sitzeinheit nach Anspruch 1 oder 2, **dadurch gekennzeichnet, dass** drei Informationen über den Referenzzustand und die zusätzlichen Referenzzustände vorhanden sind.

4. Sitzeinheit nach einem der vorhergehenden Ansprüche, **dadurch gekennzeichnet, dass** jeder Sitz mindestens zwei bewegliche Elemente (18, 20) umfasst, die jeweils mechanisch mit einer Betätigungsvorrichtung (22, 24) verbunden sind, dass jeder Sitz eine Vorrichtung (50) umfasst, die dazu geeignet ist, unter der Wirkung eines einzigen, von dem Benutzer gelieferten Steuerbefehls den Sitz in mindestens eine vorbestimmte Ausführung zu bringen, und dass die vorbestimmten Zielpositionen oder die Referenzposition der Sitzelemente die Positionen der Sitzelemente in der bzw. jeder vorbestimmten Ausführung des Sitzes sind.

5. Sitzeinheit nach Anspruch 4, **dadurch gekennzeichnet, dass** die vorbestimmten Ausführungen des Sitzes eine Stellung für die Einnahme der Mahlzeiten, eine Landestellung und eine Liegestellung umfassen.

6. Sitzeinheit nach Anspruch 4 oder 5, **dadurch gekennzeichnet, dass** die vorbestimmten Zielpositionen und die Referenzpositionen der entsprechenden Sitzelemente für alle Sitze der Sitzeinheit identisch sind.
